# EUROPEAN PATENT APPLICATION

(11) **EP 4 406 644 A1**
(43) Date of publication of application: **31.07.2024**
(21) Application number: 22873207.9
(22) Date of filing: 23.09.2022
(51) Int. Cl.: B01J 21/00, B01J 23/755, B01J 23/75, B01J 35/02, B01J 35/10, B01J 37/03, B01J 37/08, B01J 37/00, C25B 1/04

(54) **NANO FLAKE-SHAPED SPINEL OXIDATION CATALYST FOR ANION EXCHANGE MEMBRANE WATER ELECTROLYSIS AND PREPARATION METHOD THEREOF**

(30) Priority: 24.09.2021 KR 20210126220
(71) Applicant: Hanwha Solutions Corporation, Jung-gu Seoul 04541 (KR)
(72) Inventor: KIM, Gil Ho, Daejeon 34128 (KR); PARK, Joung Hoon, Daejeon 34128 (KR); WOO, Wan Jong, Daejeon 34128 (KR); SONG, Kyu Ho, Daejeon 34128 (KR); ROH, Chiwoo, Daejeon 34128 (KR)
(74) Representative: Berggren Oy
(86) International application number: PCT/KR2022/014263
(87) International publication number: WO 2023/048503

(57) **Abstract**

The present invention relates to an oxidation catalyst for anion exchange membrane water electrolysis that exhibits excellent catalytic activity, electrical conductivity and a large surface area, and a preparation method thereof, an anode for anion exchange membrane water electrolysis and an anion exchange membrane water electrolysis system, each including the same.

The oxidation catalyst for anion exchange membrane water electrolysis of the present invention includes a spinel-based oxide, and is prepared by precisely controlling the use of complexing agent and the pH using a co-precipitation method, whereby the oxidation catalyst can reduce the catalyst particle size to facilitate uniform dispersion of high viscosity and has a nano-sized flake structure, which makes it possible to uniformly coat the ionomer between flakes, and forms a porous structure, thereby widening the surface area and achieving excellent catalytic activity.

## Description

### [TECHNICAL FIELD]

### CROSS-REFERENCE TO RELATED APPLICATION(S)

This application claims the benefit of Korean Patent Application No. 10-2021-0126220 filed on September 24, 2021 in the Korean Intellectual Property Office, the disclosure of which is incorporated herein by reference in its entirety.

The present invention relates to an oxidation catalyst for anion exchange membrane water electrolysis that exhibits excellent catalytic activity, electrical conductivity and a large surface area, and a preparation method thereof, and an anode for anion exchange membrane water electrolysis and an anion exchange membrane water electrolysis system, each including the same.

### [BACKGROUND ART]

Water electrolysis technology is a technology that produces hydrogen by decomposing water with electricity, was first invented in the 1800s, and has been used in commercial hydrogen production since the 1920s. Recently, as the need and share of renewable energy has significantly increased, the water electrolysis technology has been attracting attention as a solution for low-carbon, green hydrogen production.

Current water electrolysis technologies mainly commercially applied include an alkaline water electrolysis(AWE) system and a proton exchange membrane water electrolysis(PEMWE) system.

Of them, the alkaline water electrolysis method uses inexpensive nickel-based electrodes and a porous membrane, and therefore, it can secure price competitiveness. However, due to a wide gap between porous diaphragms and electrodes, there are disadvantages in that an internal resistance is high and operation is only possible at a low current density. In addition, since the alkaline water electrolysis system has a large stack volume, high operating cost, and difficult rapid changes in current density due to the application of porous diaphragms, there are disadvantages in that it is difficult to apply in coupling with renewable energy sources such as wind power or solar heat, etc.

Meanwhile, the proton exchange membrane water electrolysis system is under development at the MW scale. This proton exchange membrane water electrolysis system can be driven with a high current density, and the compact design of the system is possible, and hydrogen to be produced has high purity, and an initial output pressure and a minimum load can be maintained low. In addition, the proton exchange membrane water electrolysis system is suitable for producing hydrogen in conjunction with renewable energy due to its fast response speed.

However, in the proton exchange membrane water electrolysis system, an expensive precious metal catalyst and a bipolar plate as a precious metal to prevent corrosion must be used, and therefore, there is a disadvantage in that the overall manufacturing cost greatly increases.

Accordingly, as a technology to replace the commercially applied alkaline water electrolysis system and proton exchange membrane water electrolysis system, an anion exchange membrane water electrolysis system has been currently proposed, and interest and research on the system have been greatly increased.

Compact design of this anion exchange membrane water electrolysis system is possible, and it is operated in the same atmosphere as the alkaline water electrolysis system, and therefore, it is possible to use non-precious metal materials. Accordingly, this anion exchange membrane water electrolysis system may be considered as a system that utilizes the advantages of the alkaline water electrolysis system and the proton exchange membrane water electrolysis system together.

However, in order to improve the performance of this anion exchange membrane water electrolysis system, it is required to use an oxidation catalyst exhibiting excellent electrical conductivity and catalytic activity and having high durability at an oxidation anode in which an oxygen evolution reaction involving a larger overpotential, for example, a reaction of the following Reaction Scheme occurs:

[Reaction Scheme 1] 4OH⁻ → O₂ + 2H₂O +4e⁻

Considering that the anion exchange membrane water electrolysis system is operated at a low temperature of about 100°C or higher, a precious metal catalyst such as IrO₂ or RuO₂ has been considered as an oxidation catalyst that satisfies the above requirements. However, these precious metal catalysts are difficult to commercialize due to their high unit price, and it is difficult to utilize the advantages of anion exchange membrane water electrolysis system.

Thus, in recent years, studies have been continued to apply layered structure compounds(LDH; Layered double hydroxides), perovskite-based compounds, or spinel-based compounds as the oxidation catalyst. However, since the layered structure compounds and the spinel-based compounds have relatively high catalytic activity while having low electrical conductivity, they are unsuitable for use as the oxidation catalysts.

Unlike the same, perovskite-based compounds, which are oxides represented by a general formula of A₂BO₄ (wherein A or B are an alkaline earth metal or a transition metal, respectively), may exhibit excellent catalytic activity, and may also exhibit excellent electrical conductivity through doping of various metal atoms.

However, spinel-structured compounds synthesized by conventional co-precipitation methods are formed into nano-sized particles, but have high surface energy and so easily aggregate, and the particle diameter increases, resulting in a decrease in surface area and often lowering catalytic activity. There is also a problem that due to its high specific gravity, it precipitates during the slurry manufacturing process, making high dispersion difficult and making it difficult to manufacture a uniform coating layer. In addition, spinel-structured compounds manufactured by conventional co-precipitation methods have the problems in that they have high surface energy and easily aggregate, and the ionomers are unable to coat evenly, which reduces adhesion. As the current density increases, generation of bubbles increases, which accelerates detachment of the catalyst layer and lowers durability.

Thus, research is being conducted to improve the dispersion process to produce a highly dispersed, uniform catalyst layer, however, this is not a fundamental solution because it requires additional equipment and energy, increasing production costs. Therefore, oxidation catalysts that can be applied to anion exchange membrane water electrolysis systems and exhibit excellent properties have not yet been properly developed.

In addition, a catalyst layer with high porosity widens the contact surface between the ionomer and the reactant(OH-) and increases in the interface of the three phases, thereby exhibiting excellent cell performance. Therefore, in order to achieve excellent performance in a cell, the porosity of the catalyst layer needs to be high.

Thus, there is a continued need for the development of a spinel-based oxidation catalyst that can be manufactured to improve dispersibility and have high porosity by controlling the catalyst particle size and specific gravity.

### [DETAILED DESCRIPTION OF THE INVENTION]

### [Technical Problem]

It is an object of the present invention to provide an oxidation catalyst for anion exchange membrane water electrolysis including a spinel-based oxide that not only has a wide surface area, enables uniform coating of ionomer and has excellent catalytic activity, but also is low in aggregation force and enables uniform dispersion with high viscosity, facilitating coating for MEA (Membrane Electrode Assembly), and a preparation method thereof.

It is another object of the present invention to provide an anode for anion exchange membrane water electrolysis and an anion exchange membrane water electrolysis system, each including the oxidation catalyst.

### [Technical Solution]

Therefore, provided herein is an oxidation catalyst for anion exchange membrane water electrolysis,
the oxidation catalyst comprising a spinel-based oxide of the following Chemical Formula 1,
wherein the spinel-based oxide includes a nano flake structure:

   [Chemical Formula 1] NiCo₍₂₋ₓ₎MₓO₄
in Chemical Formula 1, 0≤x≤0.5.

Also provided herein is a method for preparing an oxidation catalyst for anion exchange membrane water electrolysis, the method comprising the steps of: co-precipitating a nickel salt, a cobalt salt, and a metal(M) salt in an aqueous solvent having a pH of 11 or more in the presence of a complexing agent to form a catalyst precursor; and calcining the catalyst precursor at a temperature of 100°C or more to form a spinel-based oxide of Chemical Formula 1.

In the spinel structure catalyst of Chemical Formula 1, cobalt (Co) material acts as an active site of the catalyst, so the activity increases as the cobalt(Co) content increases. However, when x exceeds 0.5 and the cobalt content becomes excessive, there is a problem in that the catalyst activity rather rapidly decreases.

Also provided herein is an oxidation catalyst for anion exchange membrane water electrolysis, comprising a catalyst layer including the oxidation catalyst formed on a gas diffusion layer.

Further provided herein is an anion exchange membrane water electrolysis system, comprising: a polymer electrolyte layer; a cathode located on one side of the polymer electrolyte layer; and the anode located on the other side of the polymer electrolyte layer so that the catalyst layer is in contact with the polymer electrolyte layer.

### [Advantageous Effects]

The oxidation catalyst for anion exchange membrane water electrolysis of the present invention includes a spinel-based metal oxide, and is prepared by precisely controlling the use of complexing agent and the pH using a co-precipitation method, whereby the oxidation catalyst can reduce the catalyst particle size to facilitate uniform dispersion of high viscosity, which makes MEA coating easy.

In the oxidation catalyst for anion exchange membrane water electrolysis according to the present invention, primary particles with a nanoflake structure gather to form micro-sized secondary particles, which makes it possible to uniformly coat the ionomer between nanoflake structures, and the catalyst layer forms a porous structure, thereby widening the surface area and achieving excellent catalytic activity.

Due to such excellent overall physical properties of such an oxidation catalyst, the oxidation catalyst for anion exchange membrane according to the present invention may be very preferably applied to an anion exchange membrane water electrolysis system.

### [BRIEF DESCRIPTION OF THE DRAWINGS]

FIG. 1 is a flow chart of the process for preparing an oxidation catalyst for anion exchange membrane water electrolysis containing a spinel-based oxide by co-precipitation method according to the present invention.
FIGS. 2(a) and 2(b) are electron microscope (SEM) photographs of the surfaces of the oxidation catalysts according to Comparative Examples 1 to 7 and Examples 1 to 7 of the present invention. FIG. 2(c) is a more enlarged electron microscope and transmission electron microscope (SEM, TEM) image of the surface of the oxidation catalyst according to Example 4.
FIGS. 3(a) to 3(c) show the results of XRD analysis of the oxidation catalysts according to Comparative Examples 1, 3, 5 and 6 and Examples 2, 5, 6 and 7 of the present invention.
FIG. 4 shows the results of comparing the tab densities of the oxidation catalysts according to Comparative Examples 1, 3 to 7 and Examples 2, 4 to 7 of the present invention.
FIG. 5 shows photographs of the surface and cross section of the MEA electrode catalyst layers coated with the oxidation catalysts according to Comparative Examples 1 and 3 and Examples 2 and 4 of the present invention, observed with an electron microscope (SEM).
FIG. 6 shows the measured specific surface areas of the oxidation catalysts according to Comparative Examples 1 and 3 and Examples 2 and 4 of the present invention.
FIG. 7 shows a graph of the current density (mA/cm²) in the voltage range of 1.4 to 2.2 V for a single cell containing the oxidation catalysts according to Comparative Examples 1 and 3 and Examples 2 and 4 of the present invention.

### [DETAILED DESCRIPTION OF THE EMBODIMENTS]

In the present invention, the terms "the first", "the second", and the like are used to describe a variety of components, and these terms are merely employed to differentiate a certain component from other components.

Further, the terms used in this description are just for explaining exemplary embodiments and it is not intended to limit the present invention. The singular expression may include the plural expression unless the context clearly indicates otherwise. It must be understood that the terms "comprise," "include", "have", etc. are used herein to specify the presence of stated features, integers, steps, components or combinations thereof, but do not preclude the presence or addition of one or more other features, integers, steps, components, or combinations thereof.

Further, as used herein, in case in which a layer or an element is described as being formed "on" layers or elements, it means that the layer or element is directly formed on the layers or elements, or it means that other layers or elements may be additionally formed between the layers, on a subject, or on a substrate.

While the present invention may be modified in various ways and take on various alternative forms, specific embodiments thereof are shown in the drawings and described in detail below. However, it should be understood that there is no intent to limit the present invention to the particular forms disclosed, but on the contrary, the present invention covers all modifications, equivalents, and alternatives falling within the spirit and scope of the present invention.

Now, an oxidation catalyst for anion exchange membrane water electrolysis and a preparation method thereof, and an anode and an anion exchange membrane water electrolysis system, each including the same according to exemplary embodiments of the present invention will be described in detail.

First, in the present specification, a particle diameter "Dn" refers to a particle diameter corresponding to an n% point in a particle number cumulative distribution by particle diameter. That is, D₅₀ is the particle diameter corresponding to a 50% point in the particle number cumulative distribution by particle diameter, D₉₀ is the particle diameter corresponding to a 90% point in the particle number cumulative distribution by particle diameter, and D₁₀ is the particle diameter corresponding to a 10% point in the particle number cumulative distribution by particle diameter.

The Dn may be determined using a laser diffraction method. Specifically, a powder to be analyzed is dispersed in a dispersion medium, and then the dispersion is introduced into a commercially available laser diffraction particle size measuring instrument (e.g., Microtrac S3500) in which a particle size distribution is obtained by measuring a change in diffraction pattern according to a particle size while particles are passed through a laser beam. By calculating the particle diameters corresponding to the 10%, 50% and 90% points in the particle number cumulative distribution by particle diameter obtained by the measuring instrument, the D₁₀, the D₅₀ and the D₉₀ of the present invention can be determined.

According to one embodiment of the invention, there is provided an oxidation catalyst for anion exchange membrane water electrolysis, the oxidation catalyst comprising a spinel-based oxide of the following Chemical Formula 1, wherein the spinel-based oxide includes a nano flake structure:

[Chemical Formula 1] NiCo₍₂₋ₓ₎MₓO₄

in Chemical Formula 1, 0≤x≤0.5.

The present inventors have continuously studied to develop an oxidation catalyst having excellent overall physical properties suitable for an anion exchange membrane water electrolysis system. As a result of the study, they have found that the oxidation catalyst, which is the spinel-based oxide of Chemical Formula 1 and includes a nanoflake structure, can be prepared and provided by controlling the complexing agent and the pH range, and thereby completed the present invention.

Therefore, the oxidation catalyst prepared by the production method of the present invention prevents excessive growth of secondary particles, which are formed by aggregation of primary particles containing a single or a plurality of nanoflake-structured particles, and therefore, enables uniform dispersion with high viscosity during the slurry production process. In addition, uniform coating of the ionomer between the nanoflake structures is possible, and the catalyst layer can form a porous structure with a large surface area, thereby achieving excellent catalytic activity.

Ultimately, the oxidation catalyst of one embodiment includes the spinel-based oxide of Chemical Formula 1, and can exhibit excellent electrical conductivity, catalytic activity, and MEA coating properties, and can be provided to have a large surface area, which can be very preferably applied to an anion exchange membrane water electrolysis system and its anode.

Meanwhile, in Chemical Formula 1, (2-x) represents the molar ratio of cobalt content, and x may represent the molar ratio of metal(M) content. At this time, the range of x in Chemical Formula 1 may specifically be 0≤x≤0.5, or 0≤x≤0.2. Preferably x may be 0.2. The metal molar ratio in the oxidation catalyst for anion exchange membrane water electrolysis can be confirmed by analyzing elements using methods such as ICP or by analyzing XRD.

Further, the metal(M) in Chemical Formula 1 may be one or more elements selected from the group consisting of Fe, Sc, Ti, V, Cr, Y, Zr, Nb, and Mo. Preferably, the metal(M) may be Fe.

The spinel-structured Mn₃O4 catalyst is stable because it exists in the Mn₃O₄ phase in 1M KOH (pH 14) electrolyte, however, in an oxygen evolution reaction (OER) atmosphere, it is transformed into MnO₄²⁻ ions and dissolves, making it difficult to use in an alkaline atmosphere. This can be confirmed by the Pourbaix diagram showing the relationship between pH and voltage.

Further, pure Mn-based spinel catalyst (Mn₃O₄) has an overpotential of 370 to 570 mV at a current density of 10 mA/cm². Therefore, despite being doped with various materials such as Ni, Co, Pt, etc. to increase catalytic activity, the catalyst shows lower catalytic activity than IrO².

Therefore, the Mn-based spinel structure catalyst not only has low catalytic activity but also has an unstable structure in an alkaline atmosphere, making it difficult to use, and is therefore unsuitable for use as an oxygen generating catalyst for AEM water electrolysis.

The spinel oxide contained in the oxidation catalyst for anion exchange membrane water electrolysis can have the form of secondary particles in which primary particles including a single or a plurality of nanoflake structure particles aggregate.

The size of primary particles and secondary particles including nanoflake-structured particles can be confirmed using a transmission electron microscope (TEM).

Specifically, the primary particles may include a single or a plurality of nanoflake-structured particles, and have a particle diameter D₅₀ of 500 nm or less. Specifically, the particle diameter D₅₀ of the primary particles may be 1 to 500 nm, or 100 to 500 nm, or 100 to 400 nm, or 250 to 350 nm. In the present invention, a complexing agent is used in the manufacturing method and the pH range is controlled to control the degree of aggregation of the secondary particles, preventing the secondary particles from becoming too coarse and thus improving the dispersibility.

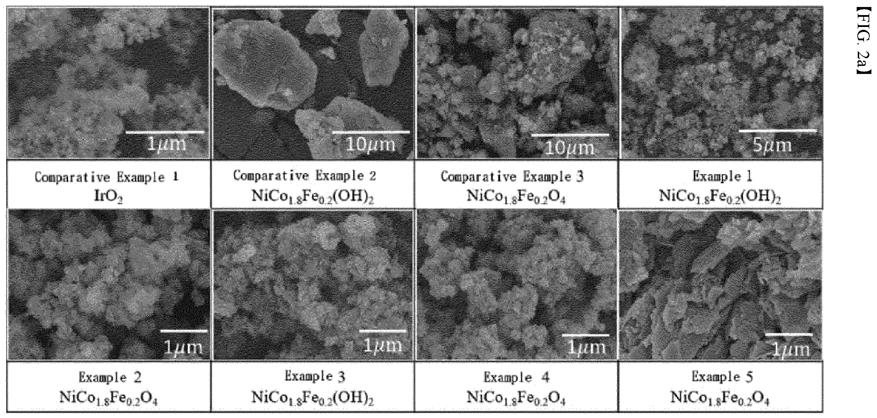

At this time, the nanoflake structure is a plate-like structure, and may be configured such that the length of the long side and the short side are the same, and the length of the long side and the short side are different. When the length of the long side and the short side are the same, the length of one side may be 300 nm or less. Specifically, the length of the long side may be 50 to 300 nm, or 100 to 300 nm, or 100 to 200 nm. If the length of the long side and short side are different, the length of the long side may be 300 nm or less, and specifically, the length of the long side may be 50 to 300 nm, or 100 to 300 nm, or 100 to 200 nm, The length of the short side may be 200 nm or less, and specifically, the length of the short side may be 10 to 200 nm, or 10 to 100 nm, or 10 to 50 nm. The thickness of the nanoflake may be 50 nm or less, specifically 1 to 50 nm, or 1 to 40 nm, or 1 to 25 nm, or 10 to 15 nm (see FIGS. 2a to c).

The oxidation catalyst for anion exchange membrane water electrolysis according to the present invention contains a nano-sized nanoflake structure, so that a porous catalyst layer can be formed when forming the catalyst layer, and an ionomer can be coated between the nanoflakes, which is advantageous in exhibiting catalytic activity. However, if the nanoflake structure exceeds the above range, the secondary particle size also grows together, making uniform dispersion of high viscosity difficult during the slurry production process, which may cause problems that it is difficult to apply to MEA coating.

Further, the secondary particles may have a monodisperse particle size distribution, and have a D₅₀ of 3 *µ*m or less. Specifically, the D₅₀ of the secondary particles may be 0.1 to 1 *µ*m, or 0.4 to 0.7 *µ*m. Further, the D₉₀ of the secondary particles may be 10 *µ*mor less, specifically 1 to 5 *µ*m, or 2 to 3 *µ*m. It can be seen that the secondary particles of the present invention are formed in a much smaller size than secondary particles produced by existing co-precipitation methods. This is because the present invention prepares the oxidation catalyst using a complexing agent to form a nanoflake structure, and thereby, although aggregation occurs during the slurry preparation process, the aggregation is minimized by the nanoflake structure. Therefore, the oxidation catalyst according to the present invention minimizes particle aggregation in a slurry state and maintains a small particle size, thereby enabling the production of a high-viscosity slurry and a uniform catalyst layer.

Meanwhile, the above-mentioned spinel-based oxide according to the present invention may be applied as it is as the oxidation catalyst for anion exchange membrane water electrolysis, but may also be applied in a state in which a heterogeneous element is doped in a small amount. Due to the addition of such an additional dopant, the catalytic active sites are increased to further improve the activity as the oxidation catalyst of the oxide and electrical conductivity. The type of dopant that can be added is not particularly limited, and for example, one or more types of heterogeneous elements selected from the group consisting of Ni, Fe, Cu, and Li can be doped.

As described above, the spinel-based oxide having excellent catalytic activity and electrical conductivity and the large surface area can be prepared through a preparation method using a co-precipitation method. Accordingly, according to another embodiment of the invention, the method for preparing the oxidation catalyst of one embodiment is applied.

In the preparation method of another embodiment, it is possible to precisely control the constituent elements of the catalyst precursors and the spinel oxide at the atomic level by using the co-precipitation method. In addition, when this co-precipitation method is used, the particle size of the oxide particles may be controlled within a desired small range, and the oxide may be prepared to have a more uniform particle size distribution.

The preparation method of another embodiment includes the steps of: co-precipitating a nickel salt, a cobalt salt, and a metal(M) salt in an aqueous solvent having a pH of 11 or more in the presence of a complexing agent to form a catalyst precursor; and calcining the catalyst precursor at a temperature of 100°C or more to form a spinel-based oxide of the following Chemical Formula 1:

[Chemical Formula 1] NiCo₍₂₋ₓ₎MₓO₄

in Chemical Formula 1, 0≤x≤0.5.

Further, the metal(M) of the metal(M) salt may be one or more elements selected from the group consisting of Fe, Sc, Ti, V, Cr, Y, Zr, Nb, and Mo.

Further, the temperature at which the catalyst precursor is sintered may be specifically 100 to 500°C, or 300 to 400°C, and preferably 350°C. That is, according to the preparation method according to another embodiment of the present invention, a spinel-based oxide and an oxidation catalyst can be prepared by performing calcination at a low temperature.

Through this, it is possible to suppress the decrease in the catalytic activity due to the increase in the surface area of the oxidation catalyst particles or the filling of surface defects or oxygen vacancies in the existing high-temperature solid-state reaction and heat treatment process. However, when the heat treatment temperature is excessively high, the particle size of the oxidation catalyst increases, the surface area decreases, and the catalytic active sites decrease, which may adversely affect the catalytic activity.

Meanwhile, the aqueous solvent having a pH of 11 or more can be formed by sequentially adding, to the aqueous solvent, a first pH adjusting agent containing ammonium hydroxide or ammonium sulfate, and a second pH adjusting agent containing ammonium oxalate, potassium hydroxide(KOH), or sodium hydroxide(NaOH).

That is, the aqueous solvent having a pH of 11 or more may be formed by treating a neutral aqueous solvent, for example, distilled water, with a plurality of pH adjusting agents in multiple steps.

According to a specific embodiment, the neutral aqueous solvent is treated with a first pH adjusting agent containing ammonium hydroxide or ammonium sulfate, and thus is maintained at pH 9 to 10.5, and then, further treated with a second pH adjusting agent containing ammonium oxalate, potassium hydroxide, or sodium hydroxide to obtain an aqueous solvent having a pH of 11 or more, or 13.5 or more, or 13.5 to 14. By this multi-step process, it is possible to more precisely control the pH required for the co-precipitation method.

In addition, in the co-precipitation reaction step, the complexing agent is used to more effectively obtain the catalyst precursor having a desired structure by controlling the reaction rate of the co-precipitation reaction. The complexing agent refers to a molecule or ion that coordinates around a transition metal ion to form a complex ion. Without a complexing agent, some intermediate reactions may occur too quickly, making it difficult to inhibit particle growth. From this point of view, the use of a complexing agent is necessary to match the stoichiometry in three-component systems or more.

More spec specifically, the complexing agent may form a cobalt complex by first coordinating with the cobalt salt. As a result, this cobalt complex compound slowly reacts with the nickel salt and metal(M) salt to produce a catalyst precursor having a desired atomic composition, uniform particle size distribution and lattice structure according to the stoichiometric ratio, and an oxidation catalyst using the same.

The type of the complexing agent is not particularly limited, but an ammonium salt compound may be used in consideration of appropriate reactivity with the cobalt salt, and specific examples thereof may include one or more selected from the group consisting of ammonium hydroxide (NH₄OH), ammonium sulfate ((NH₄)₂SO₄), and ammonium nitrate (NH₄NO₃), and monobasic ammonium phosphate ((NH₄)₂HPO₄).

For example, when ammonium hydroxide is used as the complexing agent, the reaction between the complexing agent and the cobalt salt may proceed in two steps as summarized in the following Reaction Scheme 2:

[Reaction Scheme 2] M²⁺ + *n*NH₄OH → [M(NH₃)ₙ]²⁺ + 2H₂O Step 1 [M(NH₃)ₙ]²⁺ + 2OH⁻ + nH₂O → M(OH)₂ + *n*NH₄OH Step 2

in Reaction Scheme 2, M includes Co.

Of them, in the step 1, primary particles having a nanoscale particle size may be formed, and in the step 2, the Ostwald ripening phenomenon occurs, and thus these primary particles agglomerate to form secondary particles having a roughly microscale particle size. As this cobalt complex compound is formed, this complex compound slowly react with nickel salts and metal(M) salts, especially iron salts, and a catalyst precursor having a desired particle size range, a uniform particle size distribution, a controlled atomic composition and lattice structure may be prepared.

In this co-precipitation reaction step, Co²⁺ ions may be oxidized to Co³⁺ or Co⁴⁺ in air. When this oxidation and phase transition occur, it may be difficult to control the atomic composition, particle size, and particle size distribution according to the stoichiometric ratio of the catalyst precursor. Therefore, the co-precipitation reaction step is preferably performed under an atmosphere in which oxygen or air is blocked, or under an inert atmosphere.

Meanwhile, in the co-precipitation reaction step, the types of the nickel salt, cobalt salt, and metal(M) salt are not particularly limited, and they may have a common salt form known to be applied in the co-precipitation reaction. However, in a more specific embodiment, the nickel salt, cobalt salt, and metal(M) salt may be in the form of acid addition salts such as nitrates, in which nitrate ions are bound to these metals, etc., or in the form of hydrates thereof.

In the preparation method of another embodiment as described above, since the catalyst precursor and the oxidation catalyst can be prepared using an acid addition salt having a relatively low unit price as a reactant, the economic feasibility and mass productivity of the overall oxidation catalyst preparation process may be improved.

In addition, in the co-precipitation reaction step, the catalyst precursor and the oxidation catalyst can be prepared by adjusting the atomic composition according to the stoichiometric ratio while controlling the rate of the co-precipitation reaction, as described above. Therefore, in the preparation method of another embodiment, when the nickel salt, cobalt salt, and metal(M) salt are co-precipitated at a molar equivalent ratio of 1:(2-x):x (0≤x≤0.5).

In addition, in order to form the complex of cobalt in an appropriate ratio and to preferably control the reaction rate using the above-described complexing agent, the complexing agent is preferably used such that the molar ratio of the metal ion of the metal salt to the complexing agent satisfies 1:0.1 to 1:1, or 1:0.2 to 1:0.6, or 1:0.2 to 1:0.4.

Through the above co-precipitation reaction step, the catalyst precursor containing respective metal elements with the desired atomic composition may be prepared. This catalyst precursor may be in the form of a hydroxide compound containing the respective metal elements of nickel, cobalt and metal(M), specifically iron in the same molar ratio as in the oxidation catalyst to be formed in the subsequent step. More specifically, the catalyst precursor may be prepared in the form of particles containing a compound of NiCo₍₂₋ₓ₎MₓOH₂ (0≤x≤0.5).

On the other hand, after the co-precipitation reaction step, the step of drying the catalyst precursor at a temperature of 50°C or higher, or 50°C to 100°C, or 60 to 90°C may be further performed, as needed. Before such a drying step, the step of washing the catalyst precursor once or more, or once to three times using water such as distilled water, etc., or alcohol such as ethanol, etc. may be further performed.

After preparing the catalyst precursor through the above-mentioned process, the catalyst precursor is sintered, for example, under an air atmosphere, at a temperature of 100 to 500°C, or 300 to 400°C, preferably 350°C, thereby preparing the oxidation catalyst of one embodiment.

However, as described above, when the calcining temperature is excessively high, the particle size of the oxidation catalyst may increase and its surface area may decrease, and the catalytic active site may be filled, which may adversely affect the activity of the oxidation catalyst, etc.

Through the above-mentioned process, the oxidation catalyst for anion exchange membrane water electrolysis of one embodiment, exhibiting a large surface area, excellent catalytic activity and electrical conductivity may be economically and efficiently prepared. This oxidation catalyst may be preferably used in an anode for an anion exchange membrane water electrolysis system according to the excellent overall physical properties described above.

Specifically, there can be provided an anode for anion exchange membrane water electrolysis, comprising a catalyst layer including the oxidation catalyst formed on a gas diffusion layer.

In particular, the anode for anion exchange membrane water electrolysis may follow the configuration of a general anode for an anion exchange membrane water electrolysis system, except for including the oxidation catalyst of one embodiment.

For example, this oxidation catalyst may consist of a porous metallic structure; and a catalyst layer including the perovskite-based oxidation catalyst of one embodiment, which is formed on the porous metallic structure.

Specifically, the anode according to the present invention may be included in an amount of 0.1 to 5 mg/cm², preferably in an amount of 2 mg/cm² per unit area of the gas diffusion layer. Within the above range, as the content of the oxidation catalyst increases, the performance of the anion exchange membrane water electrolysis system may be improved. However, when the content of the oxidation catalyst is excessively increased, the performance of the water electrolysis system may rather decrease.

Further, the oxidation catalyst according to one embodiment of the present invention is formed as an oxidation catalyst layer on a gas diffusion layer, has a porous structure, and may have a particle tab density of 1 g/mL or less, specifically 0.5 to 0.9 g/mL.

The formation thickness of the catalyst layer containing the oxidation catalyst may increase in proportion to the content of the oxidation catalyst and is not particularly limited. For example, when the gas diffusion layer is formed with a content of 2 mg/cm² per unit area, the thickness of the oxidation catalyst layer may be 4 *µ*m or more, specifically 10 *µ*m or more, and more specifically 10 to 20 *µ*m.

Since the above-described anode may be manufactured according to a general method of manufacturing an anode for an anion exchange membrane water electrolysis system, except for using the oxidation catalyst of one embodiment, additional description thereof will be omitted.

According to still another embodiment of the present invention, provided is an anion exchange membrane water electrolysis system including the anode. Such a water electrolysis system may consist of an anion exchange membrane; a cathode placed on one side of the anion exchange membrane; and the anode of another embodiment, which is placed on the other side of the anion exchange membrane such that the catalyst layer is brought into contact with the anion exchange membrane. Specifically, the anion exchange membrane water electrolysis system according to one embodiment of the present invention may be an MEA (Membrane Electrode Assembly).

This may be an anion exchange membrane water electrolysis system having improved water electrolysis performances by including the oxidation catalyst and anode of the above-mentioned embodiment.

Other matters may be implemented with reference to a water electrolysis system widely known in the art.

Hereinafter, preferred exemplary embodiments are provided for better understanding of the present invention. However, the following exemplary embodiments are only for illustrating the present invention, and the present invention is not limited thereto.

### Comparative Example 1: Novel Metal Oxidation Catalyst

Previously commercialized IrOz was used as the oxidation catalyst in Comparative Example 1.

### Examples 1 to 7 and Comparative Examples 2 to 7: Preparation of NiCo(2-x)MxO4 oxidation catalyst for water electrolysis

Hereinafter, a method for preparing an oxidation catalyst containing spinel-based oxide according to the present invention will be described.

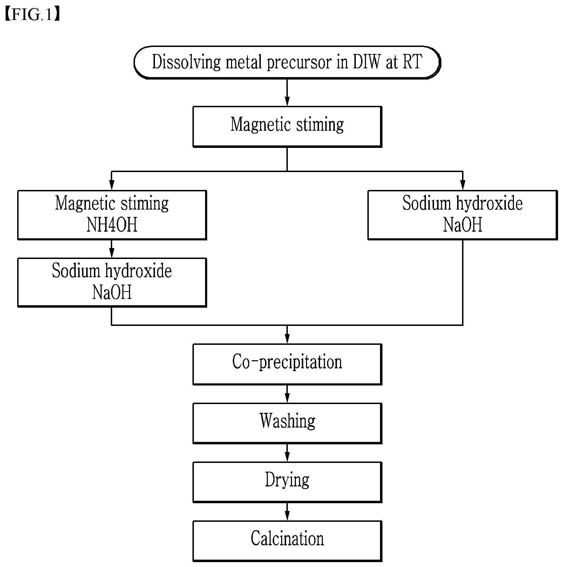

First, FIG. 1 schematically illustrates the synthesis flowchart of an oxidation catalyst containing a spinel-based oxide(NiCo₍₂₋ₓ₎MₓO₄) according to an embodiment of the present invention.

As shown in FIG. 1, first, a reactor was filled with 1 to 4 l of distilled water (DIW), ammonium hydroxide (aqueous ammonia solution) was added as a first pH adjusting agent, and then agitated at 600 rpm or more to maintain the internal pH of the reactor at 10.5. A NaOH solution was added as a second pH adjusting agent to maintain the internal pH of the reactor at the value shown in Table 1 below. When the pH is 11 or higher, elution of the cobalt transition metal may occur to form catalysts with different compositions, and in this case, it is difficult to implement a spinel structure, thereby reducing catalytic activity.

Thereafter, an aqueous ammonium hydroxide solution (NH₄OH) was mixed as a complexing agent according to Table 1 below.

Subsequently, an aqueous metal solution prepared at a molar ratio of 1:2-x:x by controlling a molar ratio of nickel salt: cobalt salt: iron salt was used as a raw material. At this time, Ni(NO₃)₃, Co(NO₃)₂, and Fe(NO₃)₃ were used as the respective metal salts and dissolved in distilled water. Further, in Examples 1 to 5 and Comparative Examples 2 to 3, the molar ratio of x was varied as described in the composition of Table 1 below.

A mixture of the aqueous metal solution thus prepared and NaOH and NH₄OH was introduced into the reactor using a metering pump. NaOH was used as a precipitant at the concentration shown in Table 1 below. Next, a co-precipitation reaction was carried out in the reactor under agitating at an agitation speed of 600 rpm to 1,000 rpm. At this time, the molar ratio was adjusted to metal ion : aqueous ammonium hydroxide as the complexing agent = 1:0.2 to 1:0.4. The co-precipitation reaction time was carried out for 24 hours or more. After the reaction was completed, the precipitate was separated and washed with distilled water (DIW). Then, it was dried in an oven at 80°C for 12 hours.

Thereafter, oxidation catalysts containing spinel-based oxide of Chemical Formula 1 of Examples 1 to 7 and Comparative Examples 2 to 7 were each prepared by calcining under an air atmosphere under the conditions described in Table 1 below.

**Table 1**

| | Composition of catalyst | Concentrat ion of precu rsor (mol/ L) | Synthesis condition | | | | | Heat |
|---|---|---|---|---|---|---|---|---|
| | | | Complexing agent | Conc entrat ion of comp lexin g agent (mol/ L) | Precipi tant | Concen tration of precipit ant (mol/L) | pH | treatment conditions |
| Compar ative Exampl e 1 | IrO₂ | - | - | - | - | - | - | None |
| Compar ative Exampl e 2 | NiCo_{1.8}Fe_{0.2}(OH)₂ | 0.25 | None | - | NaOH | 0.5 | 11 | None |
| Compar ative Exampl e 3 | NiCo_{1.8}Fe_{0.2}O₄ | 0.25 | None | - | NaOH | 0.5 | 11 | 350°C |
| Exampl e 1 | NiCo_{1.8}Fe_{0.2}(OH)₂ | 0.25 | NH₄OH | 0.05 | NaOH | 0.45 | 11 | None |
| Exampl e 2 | NiCo_{1.8}Fe_{0.2}O₄ | 0.25 | NH₄OH | 0.05 | NaOH | 0.45 | 11 | 350°C |
| Exampl e 3 | NiCo_{1.8}Fe_{0.2}(OH)₂ | 0.25 | NH₄OH | 0.1 | NaOH | 0.4 | 11 | None |
| Exampl e 4 | NiCo_{1.8}Fe_{0.2}O₄ | 0.25 | NH₄OH | 0.1 | NaOH | 0.4 | 11 | 350°C |
| Compar ative Exampl e 4 | NiCo_{1.8}Fe_{0.2}O₄ | 0.25 | NH₄OH | 0.5 | None | - | 11 | 350°C |
| Exampl e 5 | NiCo₂O₄ | 0.25 | NH₄OH | 0.1 | NaOH | 0.4 | 11 | 350°C |
| Exampl e 6 | NiCo_{1.6}Fe_{0.4}O₄ | 0.25 | NH₄OH | 0.1 | NaOH | 0.4 | 11 | 350°C |
| Compar ative Exampl e 5 | NiCo_{1.4}Fe_{0.6}O₄ | 0.25 | NH₄OH | 0.1 | NaOH | 0.4 | 11 | 350°C |
| Compar ative Exampl e 6 | NiCo_{1.8}Fe_{0.2}O₄ | 0.25 | NH₄OH | 0.1 | NaOH | 0.4 | 10 | 350°C |
| Compar ative Exampl e 7 | NiCo_{1.8}Fe_{0.2}O₄ | 0.25 | NH₄OH | 0.1 | NaOH | 0.4 | 10. 5 | 350°C |
| Exampl e 7 | NiCo_{1.8}Fe_{0.2}O₄ | 0.25 | NH₄OH | 0.1 | NaOH | 0.4 | 12 | 350°C |

### <Experimental Example 1> Measurement of SEM and TEM Image

First, the oxidation catalysts of Examples 1 to 7 and Comparative Examples 1 to 7 were analyzed with an electron microscope (SEM) and a transmission electron microscopy (TEM), and the images are shown in FIGS. 2a to 2c, respectively.

Looking at the particle image of the commercial IrO₂ oxidation catalyst of Comparative Example 1 in FIG. 2a, primary particles of several nanometers were aggregated to form secondary particles of several micrometers in size.

Looking at the images of the oxidation catalyst particles of Comparative Examples 2 and 3 in FIG. 2a, Comparative Examples 2 and 3 were synthesized by co-precipitation method without using ammonium hydroxide as a complexing agent, Comparative Example 2 was an oxide precursor that was not heat-treated, and Comparative Example 3 was an oxidation catalyst that was heat-treated. Looking at the SEM images of Comparative Examples 3 and 4, it was confirmed that the primary particles aggregated to form secondary particles with a size of several tens of *µ*m. Large particles have not only a low surface area but also a high specific gravity, and precipitate during the slurry process, making MEA coating difficult because uniform dispersion of high viscosity is difficult.

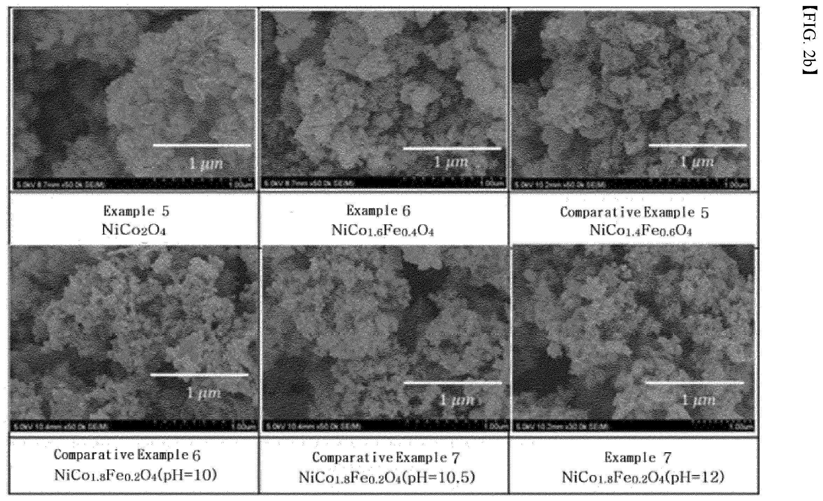

Looking at the images of the oxidation catalyst particles of Examples 1 to 7 excluding Comparative Example 4 in FIGS. 2a and 2b, Examples 2 and 4 are oxidation catalysts containing spinel-based oxides prepared by varying only the concentrations of the complexing agent and the precipitant, Examples 1 and 3 are precursors of Examples 2 and 4, respectively, which were not heat-treated. In addition, FIG. 2b is a more enlarged image of the oxidation catalyst according to Example 4.

Looking at the images of Examples 2 and 7, it was confirmed that primary particles of hundreds of nm in size containing a plurality of nanoflakes were formed, and that these primary particles gathered to form secondary particles of several *µ*m. Catalysts such as Examples 2 and 7 have a nanoflake structure and have a large surface area, but primary particles containing a plurality of nanoflakes aggregate to form secondary particles of several microns in size, which does not cause aggregation phenomenon during the slurry production step. Therefore, the oxidation catalysts of Examples 2 and 7 can form a porous catalyst layer, can exhibit excellent performance in actual cells, can be dispersed uniformly with high viscosity, so that no additional dispersion process is required, and MEA production costs can be reduced.

Looking at the images of the oxidation catalyst particles of Comparative Example 4 in FIG. 2a, Comparative Example 4 was prepared by a co-precipitation method without using the precipitant NaOH, and it was confirmed that primary particles gathered together to form plate-like secondary particles of several *µ*m in size. Comparative Example 4 has more excellent reactivity than Comparative Examples 2 and 3 because the size of the secondary particles is several micrometers, the particles are small and the surface area is large. In addition, aggregation did not occur during the slurry production step, and it appeared that uniform dispersion with high viscosity was possible compared to Comparative Examples 2 and 3. However, it was appeared that since the nanoflake structure was not observed, a porous structure was not formed unlike Examples 2 and 7, and the uniform coating of the ionomer between the flakes was inferior to that of Examples 2 and 7. In addition, when the precipitant NaOH was not used, it was difficult to match the composition due to the elution of some cobalt (Co) ions.

Further, in the case of Comparative Examples 6 and 7 prepared at low pH, as the pH is lower, the catalyst particles are smaller and it is difficult to implement a nanoplate shape, and thus, it also is difficult to form a porous structure. Therefore, it is considered hat uniform coating properties ionomer between flakes are inferior.

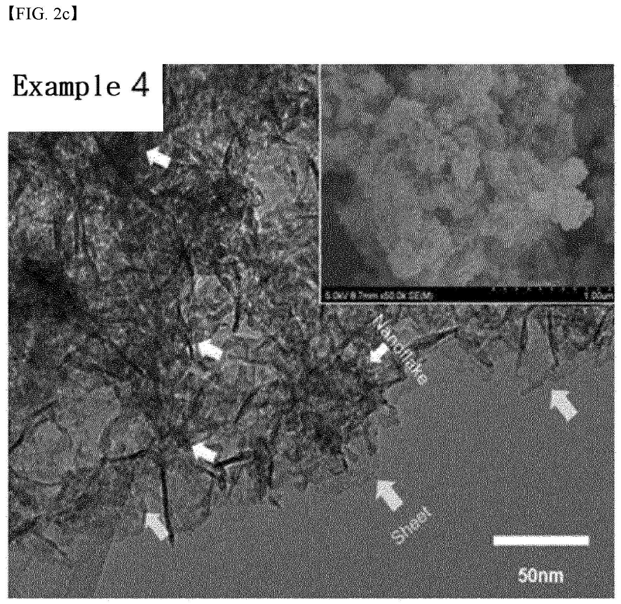

FIG. 2c is a transmission electron microscope (TEM) image of the surface of the oxidation catalyst according to Example 4, and the nanoflake structure could be observed more clearly.

### <Experimental Example 2> XRD Measurement

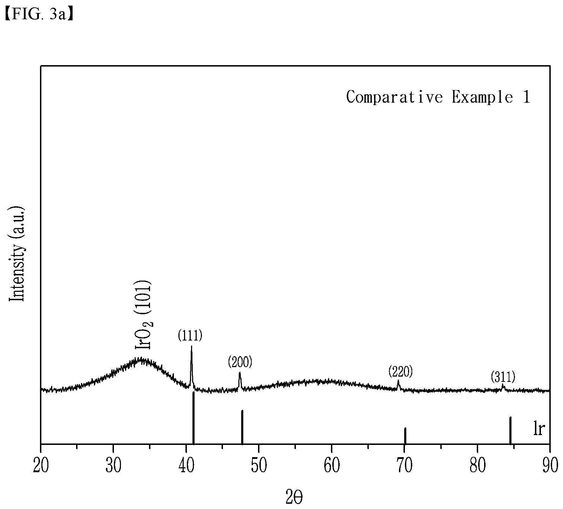

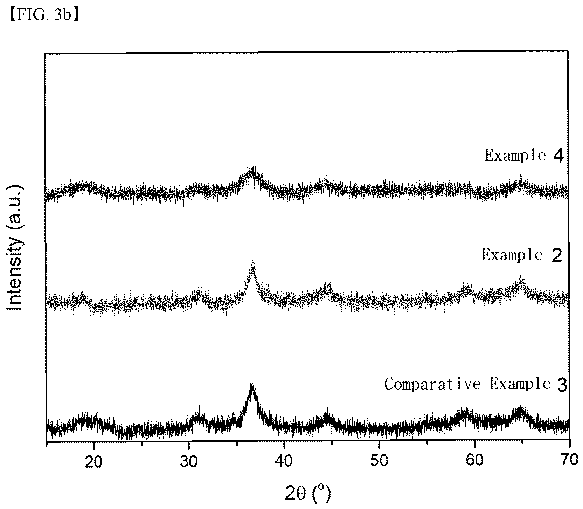

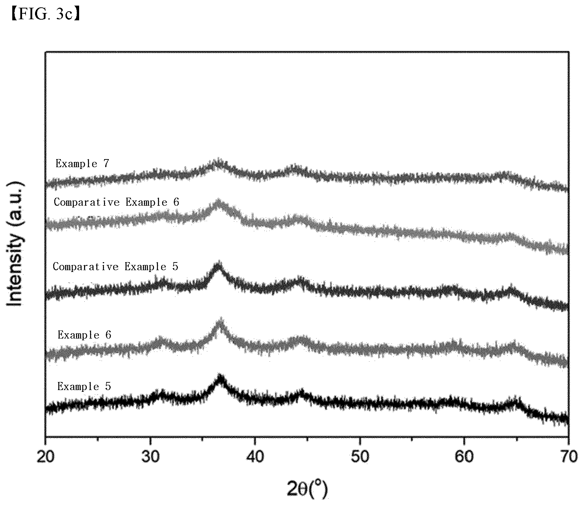

FIGS. 3a to 3c show XRD images of the oxidation catalysts. It was confirmed that the intensity of the XRD peak of the oxidation catalysts of Examples 2 and 4 prepared by the co-precipitation method of the present invention is 1ower than that of Comparative Example 3. This is because nanoflake-structured particles are formed in the oxidation catalysts of Examples 2 and 4. From the XRD measurement, it was confirmed that nanoflakes were well formed in Examples 2 and 4. Similarly, it was confirmed that in Examples 5, 6 and 7, the intensity of the XRD peak of the oxidation catalyst appeared to be low, and thus, nanoflake structure particles were well formed.

### <Experimental Example 3> Measurement of particle size distribution (PDS)

Table 2 below shows the results of measuring the catalyst particle size after preparing a slurry by mixing the oxidation catalysts and solvents obtained from Comparative Examples 1, 3, and 4 and Examples 2 and 4.

**Table 2**

| | D₁₀ (*µ*m) | D₅₀ (*µ*m) | D₉₀ (*µ*m) |
|---|---|---|---|
| Comparative | 1.09 | 5.23 | 18.3 |
| Example 1 | | | |
| Comparative Example 3 | 0.45 | 3.14 | 12.3 |
| Example 2 | 0.81 | 0.64 | 2.04 |
| Example 4 | 0.81 | 0.66 | 2.24 |
| Comparative Example 4 | 0.55 | 2.11 | 10.3 |

The IrO₂ oxidation catalyst of Comparative Example 1 showed that primary particles with a size of several nm aggregated during the slurry production process to form particles with a size of 18.3*µ*m based on D₉₀.

The NiCo_{1.8}Fe_{0.2}O₄ catalyst synthesized by the co-precipitation method without using a complexing agent in Comparative Example 3 also aggregated during the slurry production process to form particles with a size of 12.3*µ*m based on D₉₀, and appeared to form smaller particles than Comparative Example 1, but appeared to form particles about 6 times larger than Examples 2 and 4 based on D₉₀.

It was shown that the NiCo_{1.8}Fe_{0.2}O₄ catalyst prepared by the co-precipitation method using the complexing agent of Examples 2 and 4 forms a nanoflake structure and aggregates during the slurry production process, but the aggregation is minimized due to the nanoflake structure, and particles with sizes of 2.04*µ*m and 2.24*µ*m were formed based on D₉₀.

On the other hand, in the case of Comparative Example 4, it was confirmed that a precipitant was not used in the manufacturing process, and aggregation occurred as in the case where a complexing agent was not used, resulting in large particles.

In the case of Examples 5 and 6 and Comparative Examples 5 to 7, the particle size distribution was not significantly different from that of Examples 2 and 4. Through this, it was found that the particle size is affected by the concentration of complexing agent and precipitant and that the effect of pH is not significant.

From this, it can be seen that the oxidation catalyst prepared by the improved co-precipitation method of the present invention has a nanoflake structure, which minimizes particle aggregation in the slurry state and keeps the particle size small, making it possible to produce a high-viscosity slurry and produce a uniform catalyst layer.

### <Experimental Example 4> Measurement of particle tab density

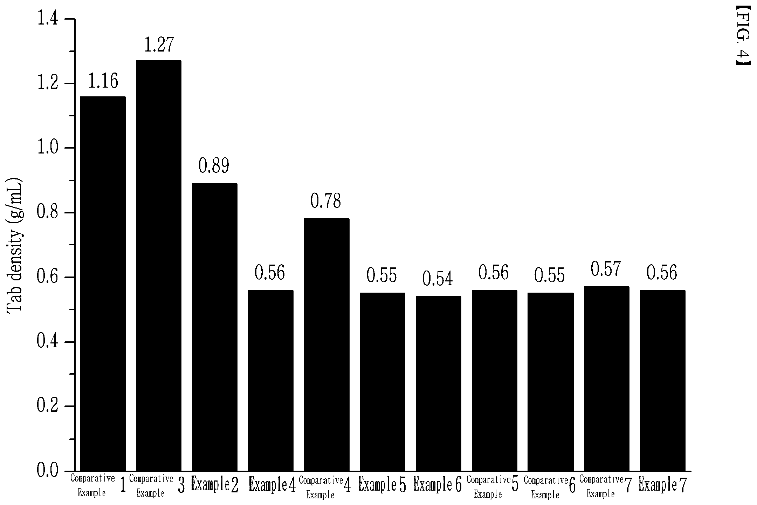

FIG. 4 shows the tab density of the oxidation catalysts of Comparative Examples 1 and 3 and Examples 2 and 11. The particle tab density is a value that shows the density at which particles are stacked, and is a numerical value that allows predicting whether or not the catalyst layer will be formed porous. As the particle tab density is lower, the catalyst layer is more porous.

The tab density of the IrO₂ oxidation catalyst particles of Comparative Example 1 was 1.16 g/mL, the tab density of the NiCo_{1.8}Fe_{0.2}O₄ catalyst prepared by the existing co-precipitation method in Comparative Example 3 was 1.27 g/mL.

Since the oxidation catalysts of Comparative Example 1 and Comparative Example 3 do not have a large difference in tab density, it was predicted that when the same weight of oxidation catalyst slurry per unit area was applied to the electrode, a catalyst layer of equal thickness would be formed.

However, the tab density of the oxidation catalyst in Example 2 was 0.89 g/mL, and that the tab density in Comparative Example 4 was 0.78 g/mL. The oxidation catalyst of Example 4 had a tab density of 0.55 g/mL, and was only about 70% or 56% of the tab density of the oxidation catalyst of Comparative Example 3 prepared by the existing co-precipitation method. That is, the oxidation catalysts of Examples 2 and 7 were predicted to form a thicker catalyst layer than that of Comparative Example 3 when the same weight of oxidation catalyst slurry was applied to the electrode.

### <Experimental Example 5> Observation of the surface and cross section of the catalyst coating layer

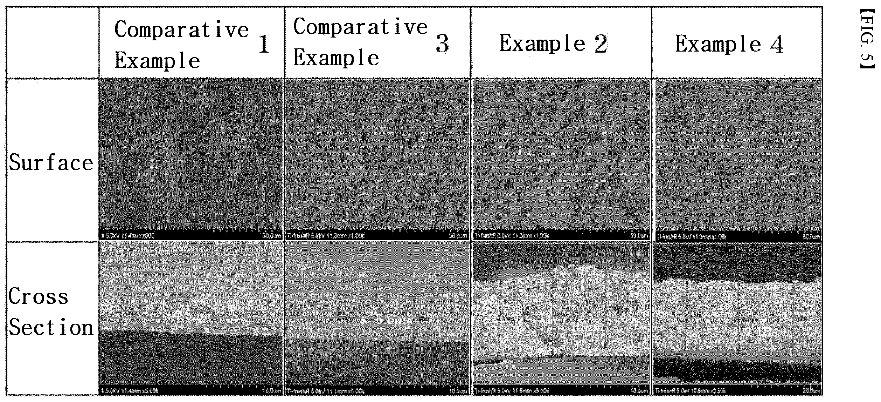

The surface and cross section of the catalyst layer in which the oxidation catalyst slurry of Comparative Examples 1 and 3 was coated on the electrode at 0.2 mg/cm² are shown in FIG. 5. The particle size distribution of the surface and cross section of the catalyst coating layer of Examples 6 to 11 was similar to that of the coating layer of Examples 2 and 4.

The catalyst layer containing the oxidation catalyst of Comparative Example 1 had a thickness of about 4.5 *µ*m. The catalyst layer containing the oxidation catalyst of Comparative Example 3 had a thickness of about 5.6 *µ*m, which was similar to Comparative Example 1. In addition, looking at the cross section and surface, the catalyst layer of Comparative Example 3 showed a very dense catalyst layer. When the catalyst layer has a high density, as in Comparative Example 3, not only it is not easy to coat the ionomer, but also most of the oxidation reaction occurs only on the surface of the catalyst layer, which may lead to a deterioration in performance.

The catalyst layers containing the oxidation catalysts of Examples 2 and 4 had a thickness of about 10 *µ*m and about 18 *µ*m, respectively. Although the same amount of oxidation catalyst slurry was applied per unit area, it can be seen that a catalyst layer that was more than twice as thick as Comparative Examples 1 and 2 was formed. Further, when observing the surface and cross section of the catalyst layer containing the oxidation catalyst of Examples 2 and 4, it was found that they were formed as a porous catalyst layer. The porous catalyst layer is easy to coat with ionomer, and adsorption of reactants and detachment of products are easy, resulting in good reaction efficiency. In addition, the performance is excellent because even the inside of the coating layer can participate in the oxidation reaction.

### <Experimental Example 6> Evaluation of catalyst specific surface area

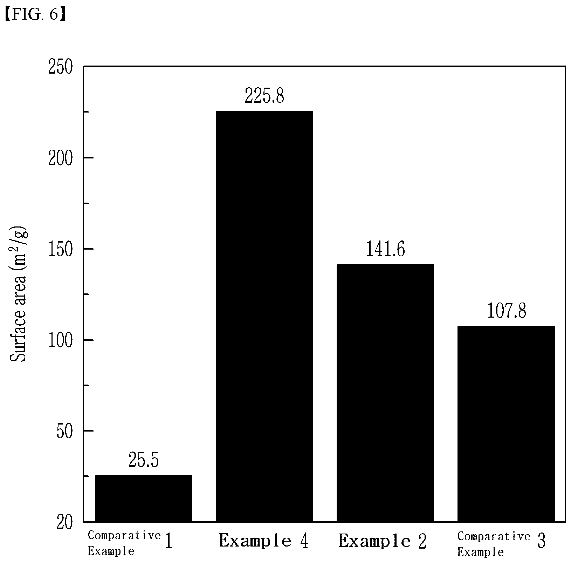

FIG. 6 shows the results of measuring the specific surface area of the catalyst. The commercial IrO₂ catalyst was measured at 25.5 m²/g, and Comparative Example 3, which did not use a complexing agent, was measured at 107.8 m²/g. On the other hand, the catalyst of Example 4 synthesized by the co-precipitation method of the present invention was found to be 225.8 m2/g. In addition, this value is 8.8 times higher than that of the conventional commercial catalyst, and about 2 times higher than that of Comparative Example 3. As the surface area is larger, the catalytic active site increases. When using the catalyst of Examples, high water electrolysis efficiency can be expected.

### <Experimental Example 7> Evaluation of single cell

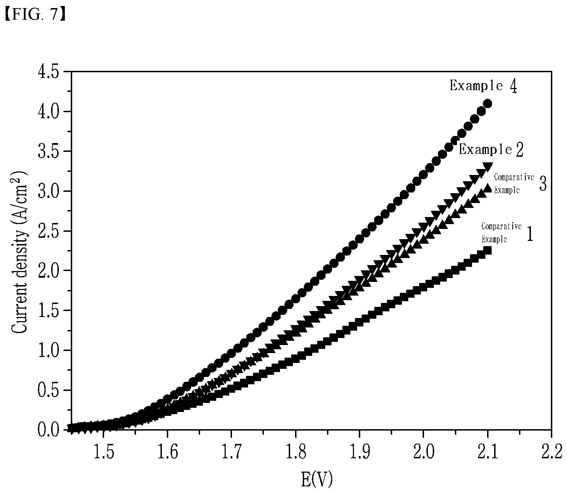

Single cells containing the oxidation catalysts of Comparative Examples 1 and 3 and Examples 2 and 4 were fabricated, and their electrochemical performance was evaluated, and is shown in FIG. 7.

The structure of the single cell is based on the fabricated MEA, and each cathode and anode part have a structure in which a gas diffusion layer (GDL), a bipolar plate, a current collector, and an endplate are symmetrical. The gas diffusion layer of the cathode was made of 300 *µ*m thick carbon paper coated with an MPL layer. The gas diffusion layer of the oxide electrode used Ti felt with a thickness of 370 *µ*m. The material of the bipolar plate is a Ni plate, and the flow channel is formed in a serpentine shape with a depth of 1 mm, and the thickness of the bipolar plate was 3 mm. The end plate was 3 mm thick and made of Ni. A Teflon sheet with a thickness of 250,um was used as the gasket.

For the catalyst coating ink, the catalyst for evaluation was prepared using the Sonication method with a mixed solvent composition of 90 wt% IPA: 10 wt% DIW, and and a content of about 1 wt%. As for the ionomer, fumatech product was added at an amount of 30% based on the catalyst.

For MEA production, the loading amount of the oxidation catalysts of Comparative Examples 1 and 3 or Examples 2 and 4 was adjusted to 2 mg/cm² at a substrate temperature of 50°C using a Sono spray coater. At this time, the cathode catalyst was prepared from TKK Pt/C (Pt 40 wt%) in the same manner, and the loading amount was adjusted to 0.4 mg/cm².

The membrane used was a fumatech FAA-3-50 product, and the effective active area was 5 cm².

The fabricated MEA was dried at 70°C for about 2 minutes, and then used for single cell assembly. When assembling a single cell, the fastening pressure was set to 70 IN.LB.

The assembled single cell was mounted on an electrolysis station, and after 30 minutes of preheating, electrolysis evaluation was performed using a linear sweep scenario from 1.45 V to 2.1 V at an interval of 0.01 V/10 sec. The electrolyte used at this time was KOH 1M, the flow rate was 90 ml/min, the cell temperature was 60°C, and the pressure was evaluated at normal pressure, and the results are shown in FIG. 9.

The oxidation catalyst of Comparative Example 1 showed 0.52 A/cm² at 1.7V, 1.34 A/cm² at 1.9V and 2.25 A/cm² at 2.1 V. The anode catalyst of Comparative Example 3 showed 0.71 A/cm² at 1.7V, 1.89 A/cm² at 1.9V, and 3.31 A/cm² at 2.1V.

As set forth above, although Comparative Example 1 showed similar density and thickness of the catalyst layer to Comparative Example 3, it showed more interior catalytic performance.

Examples 2 and 4 showed superior electrochemical performance than Comparative Examples 1 and 3.

Specifically, Example 4 showed 0.96 A/cm² at 1.7 V, 2.4 A/cm² at 1.9V, and 4.0 A/cm² at 2.1V. As compared to Comparative Example 1, Example 4 showed an improvement of 84% at 1.7 V, 79% at 1.9 V, and 78% at 2.1 V, and an overall improvement of 78 to 84%.

From the above results, it can be seen that not only that self-activity of the NiCo_{1.8}Fe_{0.2}O₄ oxidation catalyst is superior to that of the commercial IrO₂ oxidation catalyst, but also, when prepared according to the improved preparation method of the present invention, secondary particles with a nanoflake structure are formed to form a porous catalyst layer, and thus have more excellent catalytic performance. In addition, the oxidation catalyst prepared according to the improved preparation method of the present invention suppresses particle aggregation in a slurry state, and thus enables uniform catalyst dispersion with high viscosity, thereby eliminating the need for a subsequent process for dispersion and reducing manufacturing costs.

## Claims

1. An oxidation catalyst for anion exchange membrane water electrolysis,
the oxidation catalyst comprising a spinel-based oxide of the following Chemical Formula 1,
wherein the spinel-based oxide includes a nano flake structure:
[Chemical Formula 1] NiCo₍₂₋ₓ₎MₓO₄
in Chemical Formula 1, 0≤x≤0.5.

2. The oxidation catalyst according to claim 1, wherein:
in Chemical Formula 1, M is one or more elements selected from the group consisting of Fe, Sc, Ti, V, Cr, Y, Zr, Nb, and Mo.

3. The oxidation catalyst according to claim 1, wherein:
the nano flake structure is a plate-like structure, which has a long side length of 300 nm or less and a surface area of 150 m²/g or more.

4. The oxidation catalyst according to claim 1, wherein:
the spinel-based oxide has a form of secondary particles in which primary particles are aggregated, and
the primary particles include a single or a plurality of nanoflake-structured particles and have a particle size (D₅₀) of 500 nm or less.

5. The oxidation catalyst according to claim 4, wherein:
the secondary particles have a particle size D₅₀ of 3 *µ*m or less and have a monodisperse particle size distribution.

6. A method for preparing an oxidation catalyst for anion exchange membrane water electrolysis, the method comprising the steps of:
co-precipitating a nickel salt, a cobalt salt, and a metal(M) salt in an aqueous solvent having a pH of 11 or more in the presence of a complexing agent to form a catalyst precursor; and
calcining the catalyst precursor at a temperature of 100°C or more to form a spinel-based oxide of the following Chemical Formula 1:
[Chemical Formula 1] NiCo₍₂₋ₓ₎MₓO₄
in Chemical Formula 1, 0≤x≤0.5.

7. The method according to claim 6, wherein:
the aqueous solvent having a pH of 11 or more is formed by sequentially adding a first pH adjusting agent and a second pH adjusting agent to an aqueous solvent, wherein the first pH adjusting agent comprises ammonium hydroxide or ammonium sulfate, and the second pH adjusting agent comprises ammonium oxalate, potassium hydroxide(KOH), or sodium hydroxide(NaOH).

8. The method according to claim 6, wherein:
the complexing agent comprises one or more selected from the group consisting of ammonium hydroxide (NH₄OH), ammonium sulfate ((NH₄)₂SO₄), ammonium nitrate (NH₄NO₃), and monobasic ammonium phosphate ((NH₄)₂HPO₄).

9. The method according to claim 6, wherein:
the nickel salt, cobalt salt, and metal(M) salt are subjected to a co-precipitation reaction at a molar equivalent ratio of 1 :(2-x):x (0≤x≤0.5).

10. The method according to claim 6, wherein:
the metal(M) of the metal(M) salt in Chemical Formula 1 is one or more elements selected from the group consisting of Fe, Sc, Ti, V, Cr, Y, Zr, Nb, and Mo.

11. The method according to claim 6, wherein:
the nickel salt, cobalt salt, and metal(M) salt each have the form of a metal acid addition salt or a hydrate thereof.

12. An anode for anion exchange membrane water electrolysis, comprising a catalyst layer including the oxidation catalyst of claim 1 formed on a gas diffusion layer.

13. The anode according to claim 12, wherein:
the oxidation catalyst is contained in an amount of 0.1 to 5 mg/cm² per unit area of the gas diffusion layer.

14. An anion exchange membrane water electrolysis system, comprising:
a polymer electrolyte layer;
a cathode located on one side of the polymer electrolyte layer; and
the anode of claim 12 located on the other side of the polymer electrolyte layer so that the catalyst layer is in contact with the polymer electrolyte layer.
